(19) 

Europäisches
Patentamt
European
Patent Office
Office européen
des brevets

(11) **EP 4 427 892 A1**

(12) **EUROPEAN PATENT APPLICATION**
published in accordance with Art. 153(4) EPC

(43) Date of publication:
**11.09.2024 Bulletin 2024/37**

(21) Application number: **22890023.9**

(22) Date of filing: **04.11.2022**

(51) International Patent Classification (IPC):
**B25J 19/00** (2006.01)

(52) Cooperative Patent Classification (CPC):
**B25J 19/00**

(86) International application number:
**PCT/JP2022/041201**

(87) International publication number:
**WO 2023/080203 (11.05.2023 Gazette 2023/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.11.2021 JP 2021180648**

(71) Applicant: **KAWASAKI JUKOGYO KABUSHIKI
KAISHA**
**Kobe-shi, Hyogo 650-8670 (JP)**

(72) Inventors:
• **KAWAI, Makoto**
**Hyogo 650-8670 (JP)**
• **NAGAHAMA, Yasuhide**
**Hyogo 650-8670 (JP)**

(74) Representative: **Müller-Boré & Partner
Patentanwälte PartG mbB
Friedenheimer Brücke 21
80639 München (DE)**

(54) **STATE-MONITORING DEVICE AND STATE-MONITORING METHOD**

(57) A current-related base data acquirer acquires first current-related base data and second current-related base data for a current of a motor that drives a robot. A base temperature acquirer acquires a first base temperature and a second base temperature, which are temperatures at the time of acquiring the above data. A current-related data acquirer acquires current-related data for the current of the motor. A temperature acquirer acquires a data acquisition temperature, which is a temperature at a time of acquiring the above data. A corrector performs a correction to the current-related data to correspond to a predetermined evaluation reference temperature, based on the first current-related base data, the second current-related base data, the first base temperature, the second base temperature, and the data acquisition temperature. A robot state evaluator evaluates the robot state using the current-related data after the correction.

FIG. 11

EP 4 427 892 A1

## Description

TECHNICAL FIELD

The present disclosure mainly relates to a state monitoring device that monitors a state of a robot and assists in the maintenance of the robot.

BACKGROUND ART

When industrial robots are repeatedly operated in factories, it is inevitable that parts of the robot (e.g., mechanical parts) will deteriorate. As the situation progresses, the robot eventually breaks down. Since a long stoppage of the line due to robot failure results in significant losses, there is a strong demand for maintenance (preservation) to be performed before a robot failure occurs. On the other hand, frequent maintenance is also difficult from the standpoint of maintenance costs, etc.

PTL 1 discloses a robot controller. In the configuration of PTL 1, data in the robot controller can be saved externally and analyzed by a device for analysis.

PRIOR-ART DOCUMENTS

PATENT DOCUMENTS

PTL 1: Japanese Patent Application Laid-Open 2007-190663

SUMMARY OF THE INVENTION

PROBLEMS TO BE SOLVED BY THE INVENTION

In PTL 1, the data of the robot to be analyzed may include data affected by temperature. However, PTL 1 does not describe any method for suppressing the effects of temperature changes on the data.

The present disclosure is made in view of the above circumstances, and its main object is to effectively suppress the effects of temperature changes and to capture the predictive signs of robot failure successfully.

MEANS FOR SOLVING THE PROBLEMS

The problem to be solved by this disclosure is as described above, and next, means for solving the problem and effects will be described.

According to the first aspect of the present disclosure, a state monitoring device with the following configuration is provided. That is, this state monitoring device monitors a state of an industrial robot that can play back a predetermined operation. The state monitoring device includes a current-related base data acquirer, a base temperature acquirer, a current-related data acquirer, a temperature acquirer, a corrector, and a robot state evaluator. The current-related base data acquirer acquires, with respect to a current of a motor driving the industrial robot, first current-related base data being current data including at least one element or being statistical data of the current data, and second current-related base data being current data including at least one element or being statistical data of the current data. The base temperature acquirer acquires a first base temperature being a temperature at a time of acquisition of the first current-related base data, and a second base temperature being a temperature at a time of acquisition of the second current-related base data. The current-related data acquirer acquires, with respect to the current of the motor, current-related data being current data including at least one element or being statistical data of the current data. The temperature acquirer acquires a data acquisition temperature being a temperature at a time of acquisition of the current-related data. The corrector performs correction to the current-related data based on the first current-related base data, the second current-related base data, the first base temperature, the second base temperature, and the data acquisition temperature. The robot state evaluator evaluates the state of the robot using the current-related data after the correction.

According to a second aspect of the present disclosure, the following state monitoring method is provided. That is, this state monitoring method is for monitoring a state of an industrial robot that can play back a predetermined operation. With respect to a current of a motor driving the industrial robot, first current-related base data being current data including at least one element or being statistical data of the current data, and second current-related base data being current data including at least one element or being statistical data of the current data are acquired. A first base temperature being a temperature at a time of acquisition of the first current-related base data, and a second base temperature being a temperature at a time of acquisition the second current-related base data are acquired. With respect to a current of the motor, current-related data being current data including at least one element or being statistical data of the current data are acquired. A data acquisition temperature being a temperature at a time of acquisition of the current-related data is acquired. A correction to the current-related data based on the first current-related base data, the second current-related base data, the first base temperature, the second base temperature, and the data acquisition temperature is performed. The current-related data after the correction is used for evaluating the state of the robot.

This allows the state of the robot to be evaluated while suppressing by the correction the influence of a temperature change. Thus, predictive signs of robot failure can be well detected.

EFFECTS OF THE INVENTION

According to the present disclosure, the influence of a temperature change can be effectively suppressed and predictive signs of robot failure can be well detected.

BRIEF DESCRIPTION OF THE DRAWINGS

FIG. 1 is a perspective diagram showing the configuration of a robot according to a first embodiment of the present disclosure.
FIG. 2 is a block diagram schematically showing the electrical configuration of the robot and state monitoring device.
FIG. 3 is a graph showing an example of current time-series data.
FIG. 4 is a graph showing a relationship between encoder temperature and grease temperature.
FIG. 5 is a conceptual diagram illustrating a correction made to comparison data.
FIG. 6 is a graph showing the transition of I2 and temperature over time.
FIG. 7 is a graph showing the transition of I2 and temperature over time.
FIG. 8 is a graph showing the transition of corrected I2 over time.
FIG. 9 is a diagram showing a screen example displayed on the display to predict a failure date based on the transition of I2 after correction.
FIG. 10 is a graph illustrating a change, in conjunction with a number of reference days, of a prediction line for determining a predicted failure date.
FIG. 11 is a flowchart showing processing performed by a state monitoring device.
FIG. 12 is a block diagram schematically showing an electrical configuration of the state monitoring device according to a second embodiment.
FIG. 13 is a flowchart showing processing performed in a state monitoring device according to the second embodiment.
FIG. 14 is a conceptual diagram illustrating processing performed on the comparison data before correction according to a fifth embodiment.
FIG. 15 is a conceptual diagram illustrating the processing performed on the comparison data before correction according to a sixth embodiment.
FIG. 16 is a conceptual diagram illustrating the DTW method used in a seventh embodiment.
FIG. 17 is a graph showing a temperature dependence of the current time-series data, with respect to the eighth embodiment.
FIG. 18 is a graph showing a motor speed transition corresponding to FIG. 17.

EMBODIMENT FOR CARRYING OUT THE INVENTION

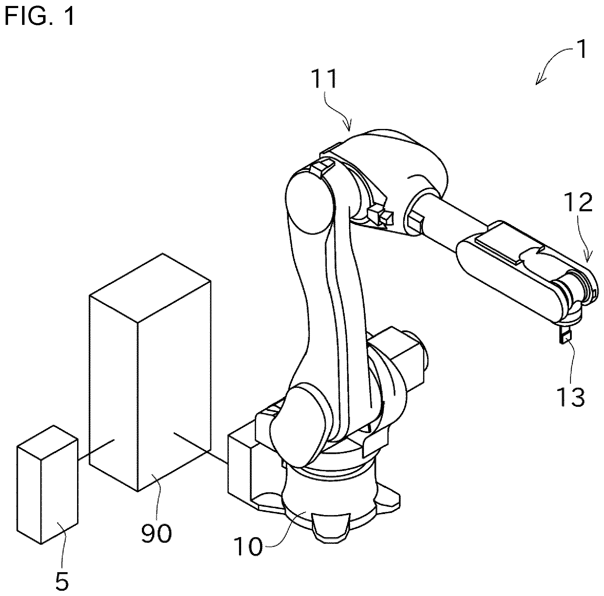

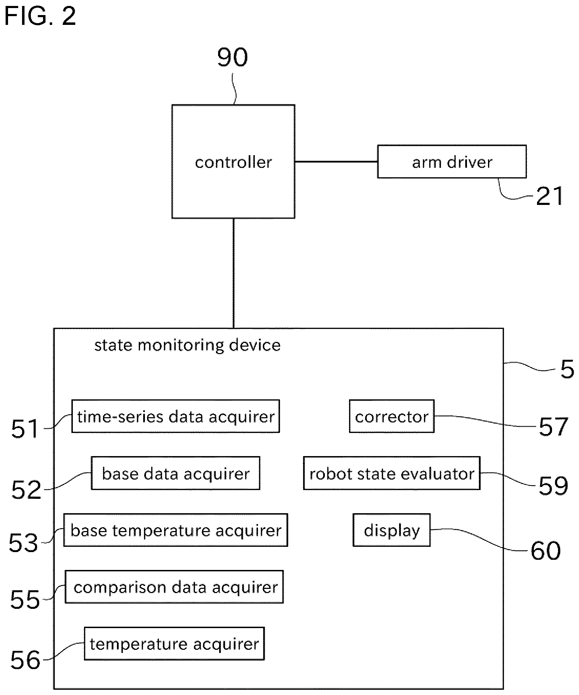

Next, the disclosed embodiments will be described with reference to the drawings. FIG. 1 is a perspective diagram showing the configuration of a robot according to a first embodiment of the present disclosure. FIG. 2 is a block diagram schematically showing the electrical configuration of a robot 1 and a state monitoring device 5.

The state monitoring device 5 related to the present disclosure is applied, for example, to a robot (industrial robot) 1 as shown in FIG. 1. The robot 1 performs painting, cleaning, welding, transporting, and other operations on the workpiece to be worked on. The robot 1 is realized, for example, by a vertical articulated robot.

The configuration of the robot 1 will be briefly described below with reference to FIG. 1 and FIG. 2, etc.

The robot 1 includes a pivot base 10, an articulated arm 11, and a wrist 12. The pivot base 10 is fixed to the ground (e.g., a factory floor). The articulated arm 11 includes multiple joints. The wrist 12 is attached to the end of the articulated arm 11. Attached to the wrist 12 is an end-effector 13 that performs work on the workpiece to be worked on.

As shown in FIG. 2, the robot 1 includes an arm driver 21.

These drivers comprise, for example, actuators configured as servo motors, and reducers. However, the configuration of the driver is not limited to the above. Each actuator is electrically connected to a controller 90. The actuator operates to reflect command values input from the controller 90.

The driving force from each of the servo motors comprising the arm driver 21 is transmitted via the reducers to each of the joints of the articulated arm 11, the pivot base 10, and the wrist 12. An encoder detecting its rotational position, not shown in the figure, is attached to each servo motor.

The robot 1 performs work by playing back an operation recorded by teaching. The controller 90 controls the above actuators so that the robot 1 replays a series of movements previously taught by a teacher. Teaching to the robot 1 can be performed by the teacher operating a teaching pendant, which is not shown in the figure.

Teaching to the robot 1 generates a program for moving the robot 1. The program is generated each time teaching to the robot 1 is performed. If different operation is taught to the robot 1, the program will be different. By switching the program to be executed between multiple programs, the operation to be performed by the robot 1 can be changed.

The controller 90 is configured as a known computer including, for example, a CPU, ROM, RAM, and an auxiliary storage device. The auxiliary storage device is configured, for example, as an HDD, SSD, or the like. The auxiliary storage device stores programs and the like to operate the robot 1.

The state monitoring device 5 is connected to the controller 90, as shown in FIG. 1. The state monitoring device 5 acquires transition of the current value of the current flowing in the actuator (servo motor) and other transitions via the controller 90.

If the servo motor and the reducer or the like connected to the servo motor were to have an abnormality, the current value of the servo motor would fluctuate under the influence of the abnormality. Therefore, this current value corresponds to a state signal that reflects the state of the robot 1. The transition of the current value can be expressed by repeatedly acquiring the current value concerned at short time intervals and arranging a large number of current values in a time series. Hereafter, data in which the state signal values are arranged in a time-series may be referred to as time-series data.

By monitoring the acquired time-series data, the state monitoring device 5 can determine presence or absence of an abnormality of the robot 1. In the present embodiment, the state monitoring device 5 mainly targets the servo motors and the reducers of the respective joints to determine presence or absence of an abnormality. Here, "abnormality" includes the case where some situation that does not lead up to operation failure/incapacity but is a predictive sign of such a situation occurs in the servo motor, the reducer or bearing.

As shown in FIG. 2, the state monitoring device 5 is equipped with a time-series data acquirer 51, a base data acquirer (current-related base data acquirer) 52, a base temperature acquirer 53, a comparison data acquirer (current-related data acquirer) 55, a temperature acquirer 56, a corrector 57, a robot state evaluator 59, and a display 60.

The state monitoring device 5 is configured as a known computer equipped with a CPU, ROM, RAM, and an auxiliary storage device. The auxiliary storage device is configured as, for example, an HDD, SSD, or the like. The auxiliary storage device stores programs, etc. for evaluating the state of the robot 1. The cooperation of these hardware and software allows the computer to be operated as the time-series data acquirer 51, the base data acquirer 52, the base temperature acquirer 53, the comparison data acquirer 55, the temperature acquirer 56, the corrector 57, the robot state evaluator 59, and the display 60, etc.

The time-series data acquirer 51 acquires the time-series data described above. The time-series data acquirer 51 acquires time-series data for all servo motors in the arm driver 21 of the robot 1. The time-series data are acquired individually for each of the plurality of servo motors (in other words, the plurality of reducers) located in each part of the robot 1.

In the present embodiment, the state signal is a current value. Here, the current value means the measured value of the magnitude of the current flowing in the servo motor measured by a sensor. The sensor is installed in a servo driver, which is not shown in the figure, that controls the servo motor. However, the sensor may be installed separately from the servo driver for monitoring purposes. Instead, a current command value that the servo driver gives to the servo motor may be employed as a state signal. The servo driver executes a feed-back control to control the servo motor to bring the current value closer to the current command value. Therefore, for the purpose of detecting a servo motor or reducer failure, there is little difference between the current value and the current command value.

The magnitude of the servo motor torque is proportional to the magnitude of the current. Therefore, a torque value or torque command value may be used as a state signal.

As a state signal, a deviation (rotational position deviation) between the target value for the rotational position of the servo motor and the actual rotational position obtained by the encoder may be used. Normally, the servo driver multiplies this deviation by a gain and gives it to the servo motor as a current command value. Therefore, the transition of the rotational position deviation shows a similar trend to that of the current command value.

The time-series data acquirer 51 acquires time-series data for each servo motor each time the robot 1 plays back the taught operation. However, instead of acquiring the time-series data for all playback operations, the time-series data may be acquired for only one or a few playback operations per day, for example.

The time-series data acquirer 51 acquires time-series data of the current value flowing to each servo motor between the timing when an acquisition start signal is received and the timing when an acquisition end signal is received. The acquisition start and end signals are output by the controller 90, for example.

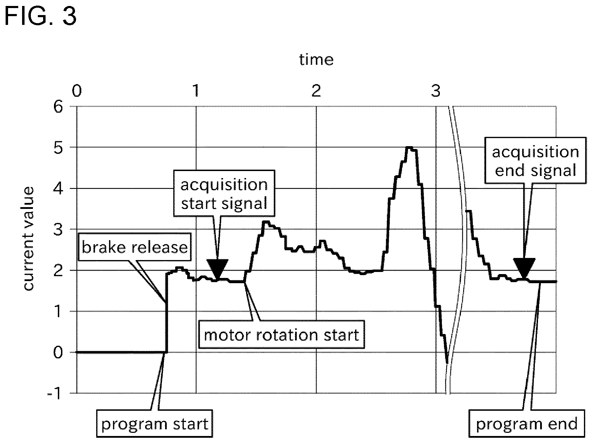

The graph in FIG. 3 shows an example of the current values flowing in the servo motor of a certain joint when the robot 1 performs a playback operation. As shown in FIG. 3, the current value of the servo motor is zero in the state before the playback operation program is executed. At this time, an electromagnetic brake, which is not shown in the figure, is operating at each joint, so the posture of the articulated arm 11, etc., is maintained.

The program of the playback operation of the robot 1 then begins. The brake is released accordingly, and at about the same time, the current begins to flow to the servo motors. At this point, an output shaft of the servo motor is controlled to stop. After a certain amount of time that is required for the angle of the output shaft of the servo motor to stabilize, the servo motor begins to rotate. This starts an operation of the robot 1 substantially.

The controller 90 outputs an acquisition start signal to the state monitoring device 5 (and thus to the time-series data acquirer 51) after the brake is released and shortly before the servo motor starts to rotate.

When all the series of movements taught to the robot 1 are completed, the servo motor is controlled to stop rotating. The controller 90 outputs an acquisition end signal to the time-series data acquirer 51 at a point after the servo motor has stopped rotating and before the program ends.

In the present embodiment, the time-series data are a number of current values acquired by repeated detection at short fixed time intervals, arranged in time order. Therefore, current values in time-series data are sampling values. The time interval for detecting current values (sampling interval) is, for example, a few milliseconds. The sampling interval of the current values may coincide with a control cycle of the robot 1, or it may be different. The time-series data correspond to the transition of the current values from the timing of the acquisition start signal to the timing of the acquisition end signal in the graph in FIG. 3.

The acquisition start signal or acquisition end signal may be substantially realized using other existing signals without special preparation for measurement such as acquisition of time-series data. For example, the fall of the "operating in playback" signal, which is mainly used for safety purposes, may be used as an acquisition end signal.

The time-series data acquirer 51 acquires time-series data repeatedly over a long period of time in the process of the robot 1 operating in a factory or other location.

Based on the time-series data acquired by the time-series data acquirer 51, the base data acquirer 52 acquires two base data. The two base data correspond to two different temperatures. The two base data and the corresponding two different temperatures are information on which the temperature compensation is based. The two base data and the corresponding two different temperatures are acquired for a period of time when the robot 1 is considered new and normal. This period of time can also be called a learning period. The time when the robot 1 is considered new and normal typically means immediately after the robot 1 is installed, but it can also be after some time of trial or break-in operation.

The base temperature acquirer 53 acquires the temperatures corresponding to the two base data.

The following is a detailed description. After teaching the operation to the robot 1, the time-series data acquirer 51 acquires the time-series data multiple times by having the robot 1 perform the playback operation over multiple times, including the first time. The number of playback operations is arbitrary. When acquiring the time-series data, the temperature at the time of acquiring the time-series data is also acquired. The temperature can be detected, for example, by a temperature sensor (not shown) provided by the encoder described above.

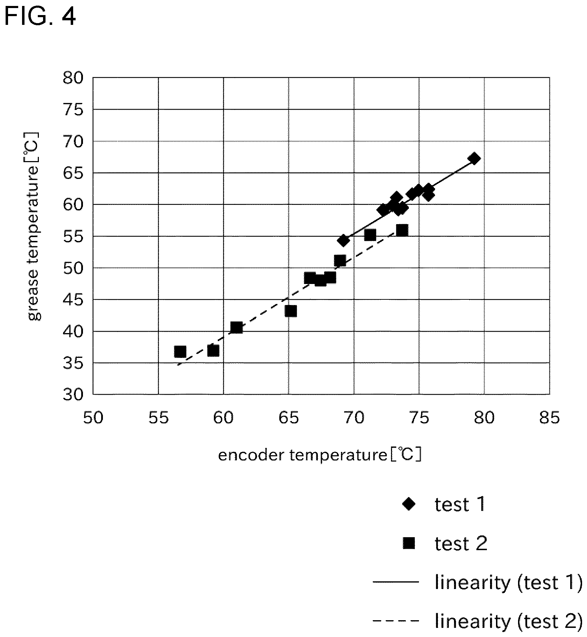

As described below, no-load running torque, which is lost torque of the reducer, varies with temperature, which can be thought of as the temperature of the grease that is a lubricant in the reducer. The reducer is usually located on the output shaft side of the motor, and a case of the motor and a case of the reducer are often in contact with each other. The temperature of the grease is affected by a temperature of the motor as well as an ambient temperature. On the other hand, the encoder is located on the anti-output shaft side of the motor (opposite the output shaft), and a case of the encoder is often in contact with the motor case. The temperature of the encoder is also affected by the temperature of the motor as well as the ambient temperature. FIG. 4 is a graph showing the results of the inventor's verification of the relationship between the temperature of the encoder and the temperature of the grease. The vertical axis indicates the grease temperature and the horizontal axis indicates the encoder temperature. At this time, the durability test was conducted by having the robot repeatedly perform certain operations. The graph shows two test results (diamond and square plots) when the robot was made to perform different operations repeatedly. The linear correlation between the two allows the temperature of the grease to be inferred from the detected encoder temperature. It is also possible to regard the encoder temperature as the temperature of the grease when evaluating.

The temperature sensor may be located at a different location than the encoder. For example, a room temperature sensor that measures a room temperature in the factory where the robot 1 operates can be used as the temperature sensor. The measured value of one room temperature sensor can be shared by multiple servo motors.

In this embodiment, the temperature detected by the temperature sensor is handled in units of 1°C, for example, by a process that truncates the decimal point. This is not limited to this, and may be handled in units of 0.5°C, for example.

Due to various factors such as time, weather, season, etc., the temperature at the time of acquiring the time-series data will fluctuate. For example, consider the case where 60 time-series data were acquired by 60 playback operations including the first time, five of which were acquired when the temperature was 25°C and another five when the temperature was 45°C. The 60 playback operations, including the first one, mean the above-described learning period for temperature compensation.

In this example, the base data acquirer 52 of this embodiment acquires the first base data by averaging the five time-series data corresponding to a temperature of 25°C. The base data acquirer 52 also acquires the second base data by averaging five time-series data corresponding to a temperature of 45°C. The first base data and the second base data are respectively time-series data of the averaged value.

Hereinafter, the temperature at the time of acquisition of the first base data is referred to as first base temperature and the temperature at the time of acquisition of the second base data is referred to as second base temperature. The base temperature acquirer 53 acquires the first base temperature (25°C) and the second base temperature (45°C).

The first base data correspond to first current-related base data and the second base data correspond to second current-related base data.

The base data acquirer 52 may use one time-series data as they are as the first base data, instead of the time-series data of the average value. However, the time-series data of the current value have many noise components. Therefore, it is preferable to use the average of multiple time-series data as the first base data in order to improve reliability. Similarly, the second base data are preferably the average of multiple time-series data. In the above example, the average of five time-series data is computed, but the number of time-series data is not limited to five but can be any plural number. From the view of reliability, it is preferable to have a large number of time-series data to be averaged.

The first base temperature and the second base temperature are determined as appropriate so that the temperature difference between them is not too small and a sufficient number of time-series data are acquired at both the first base temperature and the second base temperature.

Known filter processing may be performed on the first base data and the second base data.

The comparison data acquirer 55 acquires comparison data. While the time-series data on which the first base data and the second base data are based are acquired only initially, time-series data acquired initially and thereafter are used as comparison data. In the above example, the operation that the robot 1 repeatedly plays back can be divided into 60 playback operations, including the initial one, and subsequent playback operations. The base data acquirer 52 acquires the first base data and the second base data from the initial 60 times time-series data. The comparison data acquirer 55 acquires the comparison data from the initial 60 times playback operations and from the subsequent playback operations.

With respect to the comparison data, the time-series data may be used as they are as the comparison data and the time-series data that are filtered may be used.

The base data and the comparison data are prepared for each playback operation of the robot 1 (in other words, for each program). Although the base data and the comparison data may be acquired for all taught operations, for example, if there is a main operation to be performed by the robot 1, or a simple operation that is not the main operation but is played back once a day, the base data and the comparison data may be acquired only for this operation.

The temperature acquirer 56 acquires the temperature at the time of data acquisition when the comparison data acquirer 55 acquires the comparison data. The temperature may be acquired in the same manner as the base temperature described above. The temperature at the time the comparison data is acquired may hereinafter be referred to as data acquisition temperature.

Filter processing is performed on the base data and the comparison data, for example, to remove noise, etc., contained in the time-series data. For example, any filter such as a moving average filter or a CR circuit simulation filter can be used, while a detailed description is omitted since the filter processing for the data is known.

The corrector 57 corrects the comparison data with respect to an influence of the temperature change.

The correction is performed as follows. In this embodiment of the state monitoring device 5, a predetermined evaluation reference temperature is defined as the reference for data comparison. If the temperature at which the comparison data are acquired is different from the evaluation reference temperature, the corrector 57 corrects the comparison data so that they correspond to the data at the evaluation reference temperature. For this correction, the first base data, first base temperature, second base data, and second base temperature described above are used.

For example, consider the case where the first base temperature is 25°C, the second base temperature is 45°C, the data acquisition temperature is 32°C, and the evaluation reference temperature is 30°C.

The corrector 57 computes the value of a temperature ratio R2 defined by R2 = (evaluation reference temperature - data acquisition temperature) / (second base temperature - first base temperature). Substituting the above temperature values, R2 = - 0.1.

The temperature ratio R2 is a ratio that indicates how close the data acquisition temperature is to the evaluation reference temperature. If the absolute value of the difference between the data acquisition temperature and the evaluation reference temperature is small, the temperature ratio R2 is close to 0, and if the absolute value of the difference between the data acquisition temperature and the evaluation reference temperature is large, the temperature ratio R2 is far from 0 in the positive or negative direction. In addition, the temperature ratio R2 indicates the high/low relationship between the data acquisition temperature and the evaluation reference temperature. If the evaluation reference temperature is higher than the data acquisition temperature, R2 is positive, and if the evaluation reference temperature is lower than the data acquisition temperature, R2 is negative.

The temperature ratio R2 is used to correct the comparison data. Therefore, the temperature ratio R2 can be called a temperature ratio for correction.

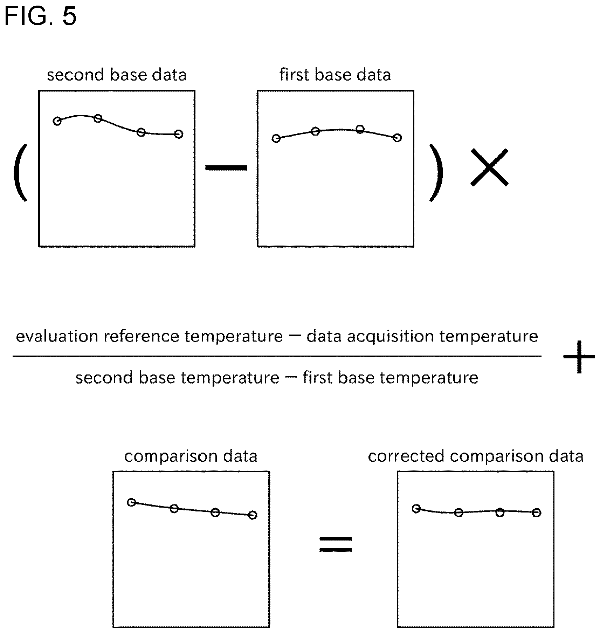

The corrector 57 multiplies the difference acquired by subtracting the first base data from the second base data by the temperature ratio R2 described above, and adds the computed result to the comparison data, as conceptually shown in FIG. 5. Thus, the corrected comparison data are acquired.

The corrected comparison data mean the time-series data that would be estimated if the data had been acquired at the evaluation reference temperature rather than at the data acquisition temperature. As described above, this correction is performed linearly, taking into account the difference between the temperature at the time the comparison data were acquired (data acquisition temperature) and the evaluation reference temperature.

The robot state evaluator 59 evaluates the state of the robot 1 (each of its parts) based on the comparison data corrected by the corrector 57.

In this embodiment, the robot state evaluator 59 computes a statistic value based on the corrected comparison data (time-series data). The statistic value can be I2, maximum value of current, minimum value of current, PTP, or PEAK. I2 is a root mean square value of the current. PTP is an abbreviation for Peak to Peak and is a value acquired by subtracting the current value of a lower peak from the current value of a higher peak of the current waveform. PEAK is a larger value of an absolute value of the maximum current and an absolute value of the minimum current. For example, if the maximum value of current in the current waveform is +15A and the minimum value is - 12A, PEAK is 15A. If the maximum value of the current in the current waveform is +11A and the minimum value is -14A, PEAK is 14A.

Next, the influence of a temperature change on the statistic values of the time-series data will be described.

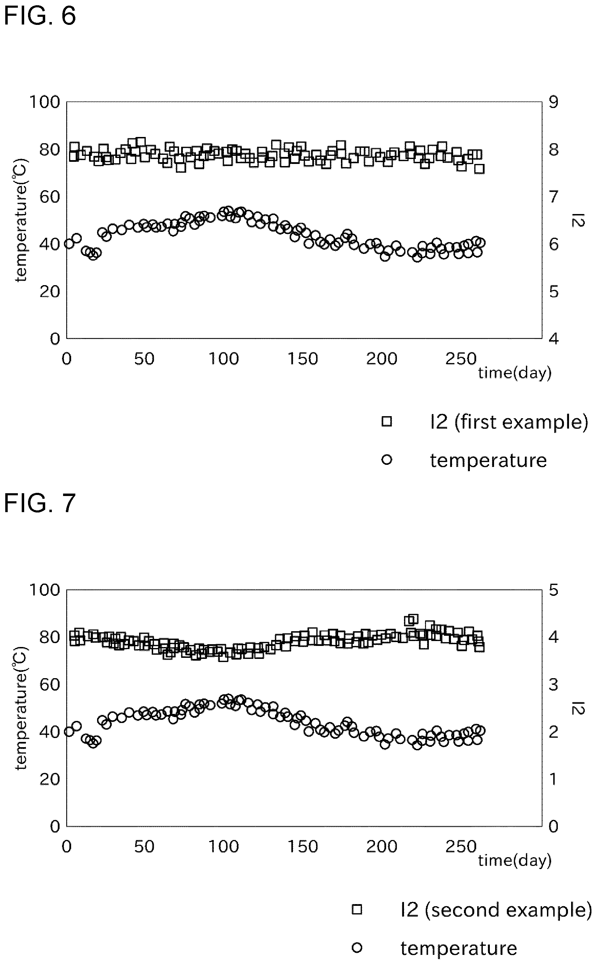

FIG. 6 shows the transition in the value of I2 and the temperature transition according to the first example with respect to one of the servo motors provided by the robot 1. FIG. 7 shows the transition of the value of I2 and the temperature transition according to the second example. In both graphs, the horizontal axis is time (specifically, the number of days elapsed). The two data were acquired at the same time, and the temperature transition is identical in the two graphs.

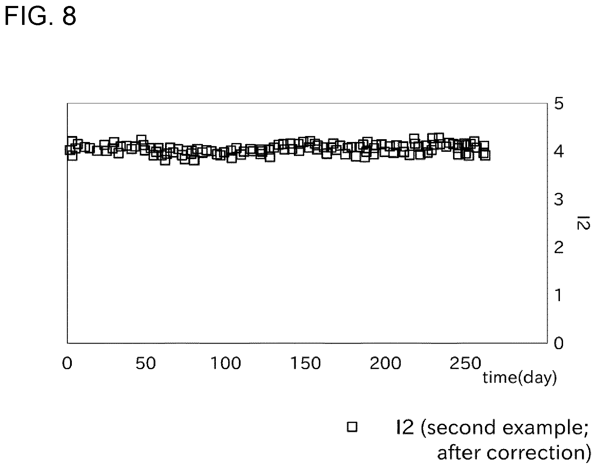

In FIGS. 6 and 7, it can be seen that the temperature moves up and down slowly in a periodic manner. As for the value of I2 computed for the waveform of the first example, as shown in FIG. 6, no particular temperature dependence could be observed. As for the value of I2 computed for the waveform of the second example, as shown in FIG. 7, it can be seen that it shows a temperature dependence. FIG. 8 shows the value of I2 computed after the correction described above for the waveform of the second example. In the graph of FIG. 8, the value of I2 remains stable, indicating that the correction is effective.

The robot state evaluator 59 outputs the acquired statistic value such as I2 or the like. The robot state evaluator 59 can plot the statistic value of I2 or the like over time and also compute a trend line showing the trend. The trend line is known and will be described briefly, but the trend line can be obtained as a straight line that approximates a group of points plotted on a graph. The approximate straight line can be obtained by using the known least squares method, but the method is not limited.

The robot state evaluator 59 computes the date and time when the trend line computed as described above reaches a predetermined lifetime threshold value. By computing the period of time from the present time to the date and time, the robot state evaluator 59 can predict the remaining life of the servo motor, etc.

The display 60 is configured, for example, as a liquid crystal display. The display 60 can display various information, such as transitions of the above I2 and other statistic values over time, as well as trend lines, etc. for example.

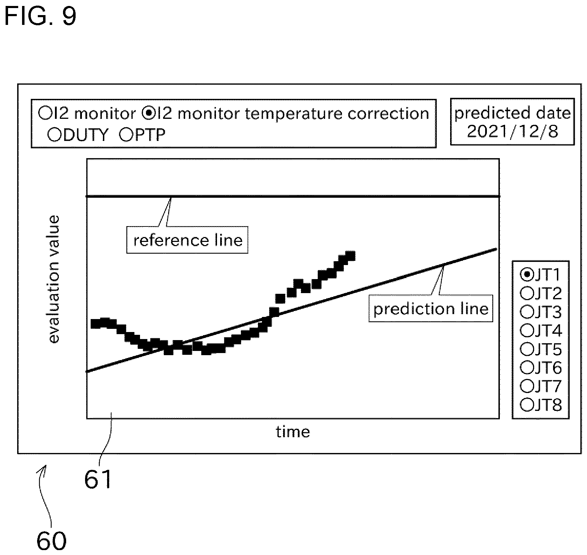

With reference to FIG. 9, the method of predicting robot failure using a temperature-corrected graph similar to FIG. 8 will be described. In FIG. 8, there is no increasing trend of the current value I2 monitor with deterioration, but in an example of the graph in FIG. 9, an increasing trend of the current value I2 monitor with deterioration is shown. In the graph in FIG. 9, the vertical axis scale is set larger in order to explain the change more clearly.

FIG. 9 shows an example of output to the display 60 by the state monitoring device 5. The state monitoring device 5 predicts and displays on the display 60 the future manner of change of the evaluation values based on the past trend of the evaluation values computed based on the current value time-series data, and also determines the predicted failure date of the robot 1 based on the future manner of change of the evaluation values.

To support maintenance, the state monitoring device 5 can display a trend management screen on the display 60, as shown in FIG. 9. Thus, the state monitoring device 5 also functions as a maintenance support device. In the example of FIG. 9, the trend management screen includes a graph display 61. In the graph display 61, the transition of the current value I2 monitor is shown by a graph. This current value I2 has been corrected with respect to the influence of the temperature change.

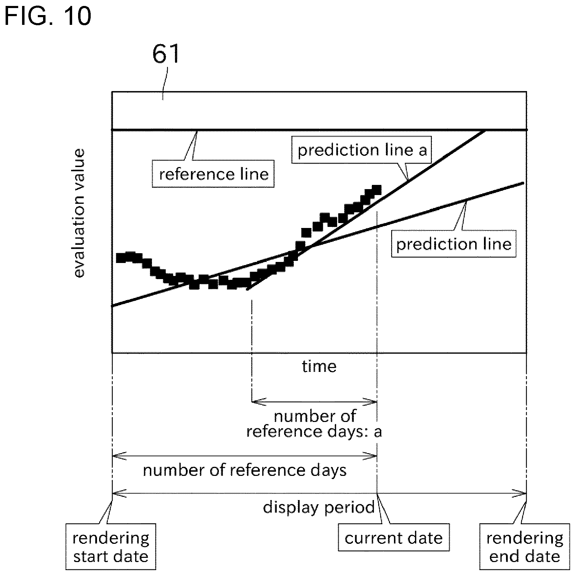

The state monitoring device 5 can change the display mode of the graph displayed in the graph display 61, as shown in FIG. 10. In FIG. 10, one end of the horizontal axis of the graph display 61 is the rendering start date and the other end of the horizontal axis is the rendering end date. The period from the rendering start date to the rendering end date corresponds to the display period of the evaluation values and the prediction line, etc. In the example in FIG. 10, the rendering start date and the rendering end date can be changed. For example, if the rendering start date is set a first number of days before the current date and the rendering end date is set a second number of days after the current date, the operator can change these first and second number of days independently. This allows the operator to ascertain his/her desired range of evaluation values.

As described above, the corrected comparison data are the time-series data that would be estimated assuming that the data were acquired at the evaluation reference temperature. Therefore, the influence of temperature change can be removed. As a result, the robot state evaluator 59 can more appropriately evaluate the state of the robot 1.

In the above example, the evaluation reference temperature is defined to be different from both the first base temperature and the second base temperature. However, the evaluation reference temperature may be equal to one of the first base temperature and the second base temperature.

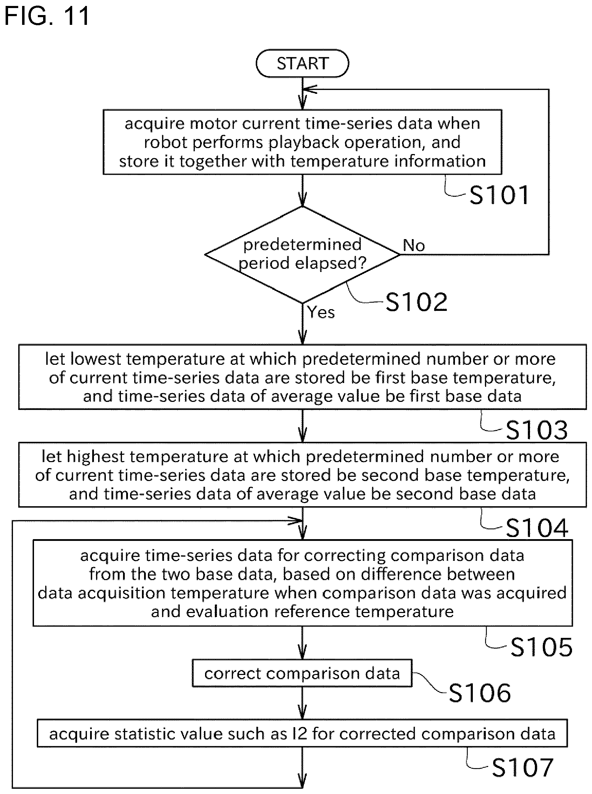

Next, the processing of the state monitoring device 5 will be described with reference to FIG. 11.

When the process in FIG. 11 starts, the time-series data acquirer 51 of the state monitoring device 5 acquires current time-series data for each time the robot 1 performs one playback operation, and stores the data together with the acquisition date and time and temperature information (step S101). The state monitoring device 5 repeats the above process until a predetermined period of time has elapsed (step S102).

When the predetermined period of time has elapsed, the base temperature acquirer 53 of the state monitoring device 5 acquires the lowest temperature for which more than five current time-series data are stored, for example, as the first base temperature. The base data acquirer 52 computes the average value time-series data based on the plurality of current time-series data acquired at this first base temperature (step S 103). This time-series data of the average value are the first base data.

The base temperature acquirer 53 then acquires the highest temperature for which more than five current time-series data are stored, for example, as the second base temperature. The base data acquirer 52 also computes the average value time-series data based on the plurality of current time-series data acquired at this second base temperature (step S 104). This time-series data of the average value are the second base data.

Steps S101 to S104 are the preparatory process, in other words, the learning period for temperature compensation. Next, the process of actually evaluating the state of the robot 1 is initiated.

First, the comparison data acquirer 55 acquires time-series data from the time-series data acquirer 51. This time-series data are the comparison data. At this time, the temperature acquirer 56 acquires the temperature at the time the comparison data were acquired. This temperature is the data acquisition temperature.

Once the comparison data and the data acquisition temperature are acquired, the corrector 57 calculates the temperature ratio R2 described above based on the difference between the evaluation reference temperature and the data acquisition temperature. The corrector 57 multiplies the difference computed by subtracting the first base data from the second base data by the temperature ratio R2. As a result, time-series data for correcting the comparison data can be acquired (step S105).

The corrector 57 then corrects the comparison data by adding the above time-series data to the comparison data (step S106).

The robot state evaluator 59 computes the statistic value such as I2 or the like for the comparison data corrected in step S106 and outputs it to the display 60 (step S107).

The process then returns to step S105, and steps S105 through S107 are repeated.

As explained above, the state monitoring device 5 according to this embodiment monitors the state of the robot 1, which is capable of playing back the predetermined operation. The state monitoring device 5 includes the base data acquirer 52, the base temperature acquirer 53, the comparison data acquirer 55, the temperature acquirer 56, the corrector 57, and the robot state evaluator 59. The base data acquirer 52 acquires first base data, which are current data, and second base data, which are current data, for the current of the motor driving the robot 1. The base temperature acquirer 53 acquires the first base temperature, which is the temperature at the time of acquiring the first base data, and the second base temperature, which is the temperature at the time of acquiring the second base data. The comparison data acquirer 55 acquires comparison data, which are current data, for the motor current. The temperature acquirer 56 acquires the data acquisition temperature, which is the temperature at the time of acquisition of the comparison data. The corrector 57 performs the correction to the comparison data based on the first base data, the second base data, the first base temperature, the second base temperature, and the data acquisition temperature. The robot state evaluator 59 uses the comparison data after the correction to evaluate the state of the robot 1.

This allows the state of the robot 1 to be evaluated while suppressing by correction the influence of temperature changes. Thus, signs of robot failure can be detected well.

In the state monitoring device 5 according to this embodiment, the robot state evaluator 59 performs a computation of I2, maximum value of current, minimum value of current, PTP, or PEAK based on the corrected comparison data and evaluates the state of the robot 1 based on this computation result.

This allows the evaluation to be performed using the statistic value with the influence of temperature changes removed.

In the state monitoring device 5 according to this embodiment, the first base data, the second base data, and the comparison data are respectively time-series data of the current.

This allows for a more appropriate evaluation of the state of the robot 1 using detailed data.

In the state monitoring device 5 according to this embodiment, the corrector 57 corrects the comparison data so that the data correspond to the data at the predetermined evaluation reference temperature.

This enables evaluation at a uniform temperature.

In the state monitoring device 5 according to this embodiment, the corrector 57 performs a linear correction to the current-related data.

This allows the influence of temperature changes to be suppressed with a simple computation.

In this embodiment of the state monitoring device 5, the first base data and the second base data are respectively time-series data of the average value based on multiple time-series data.

This can increase the reliability of the state monitoring.

Next, the second embodiment will be described. In the description of this embodiment and subsequent, the same or similar components as in the aforementioned embodiment are indicated with the same reference numeral in the drawings and may be omitted from the description.

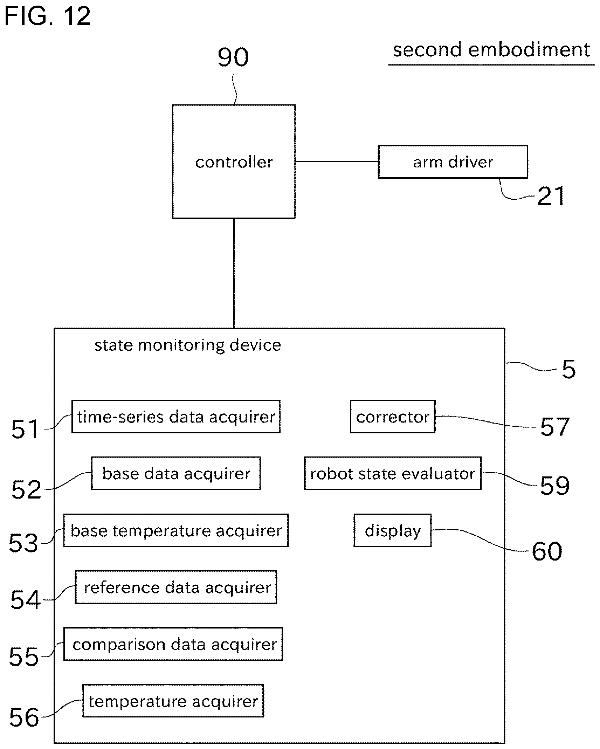

In this embodiment, the state monitoring device 5 is equipped with a reference data acquirer 54 in addition to the configuration of the first embodiment, as shown in FIG. 12.

The reference data acquirer 54 computes reference data based on the two base data acquired by the base data acquirer 52.

The reference data mean the time-series data corresponding to the evaluation reference temperature described above. In detail, the reference data are the time-series data at the evaluation reference temperature estimated by interpolation or extrapolation based on the first base data and second base data. Here, consider the case where the evaluation reference temperature is 30°C.

The reference data acquirer 54 computes the value of the temperature ratio R1 defined by R1 = (evaluation reference temperature - first base temperature) / (second base temperature - first base temperature). In this example, the first base temperature is 25°C, the second base temperature is 45°C, and the evaluation reference temperature is 30°C. Substituting these values, R1 = 0.25.

The temperature ratio R1 is a ratio that indicates how close the evaluation reference temperature is to the first base temperature. If the evaluation reference temperature is close to the first base temperature, the temperature ratio R1 is close to 0, and if the evaluation reference temperature is close to the second base temperature, the temperature ratio R1 is close to 1.

The reference data acquirer 54 multiplies the difference acquired by subtracting the first base data from the second base data by the temperature ratio R1 described above, and adds the computed result to the first base data. Thus, the reference data are acquired.

Now, consider a multidimensional space with a number of dimensions equal to the number of elements in the time-series data. The first base data and the second base data are plotted in this multidimensional space. The reference data correspond to a point acquired by internally dividing a line segment connecting the first base data point and the second base data point in the multidimensional space. The internally dividing ratio is determined based on the ratio indicating how close the evaluation reference temperature is to the first base temperature and the second base temperature.

While the above is an example of acquiring the reference data by interpolation, there may be cases where the evaluation reference temperature is not between the first base temperature and the second base temperature. In this case, the reference data can be acquired by externally dividing a line segment connecting the points of the two base data instead of internally dividing. Thus, the reference data can also be acquired by extrapolation.

The reference data acquired as described above mean the time-series data that would be estimated if the data had been acquired at the evaluation reference temperature, not at the first base temperature or the second base temperature.

The base data and reference data are prepared for each playback operation of the robot 1 (in other words, for each program). Although the base data and the reference data may be acquired for all taught operations, for example, if there is a main operation to be performed by the robot 1, or a simple operation that is not the main operation but is played once a day, the base data and the reference data may be acquired only for this operation.

In this embodiment, the robot state evaluator 59 computes an Euclidean distance (dissimilarity), which indicates the magnitude of the difference between the corrected comparison data and the reference data. The robot state evaluator 59 outputs the computed Euclidean distance as an evaluation quantity.

The Euclidean distance D between time-series data a and time-series data b is expressed by the following equation (1), where m is the length (number of elements) of the time-series data.

$$D(a,b) = \sum_{i=1}^{m} \sqrt{(a_i - b_i)^2}$$

$$= \sum_{i=1}^{m} |a_i - b_i| \qquad \ldots (1)$$

Since the Euclidean distance is known, a detailed explanation is omitted.

The robot state evaluator 59 evaluates the state of the robot 1 (each of its parts) using the Euclidean distance computed as described above. Specifically, the robot state evaluator 59 uses each Euclidean distance acquired for each servo motor to evaluate the state of the servo motor.

As time passes, it is assumed that the waveform corresponding to the current value time-series data will deviate from the waveform corresponding to the current value time-series data that are initially acquired. The Euclidean distance can be thought of as a numeration of the magnitude of this divergence. The robot state evaluator 59 uses the Euclidean distance to determine whether or not there is an abnormality in each of the servo motors of the six joints. Based on a transition of the Euclidean distance over time up to the present, it can predict when the servo motor will become inoperable/incapacitated in the future.

The robot state evaluator 59 can compute a trend line indicating the trend of the Euclidean distance over time. The robot state evaluator 59 computes the date and time when the trend line acquired as described above reaches a predetermined lifetime threshold value. By computing the period of time from the present to the date and time, the robot state evaluator 59 can predict the remaining life of the servo motor or the like.

The display 60 is configured, for example, as a liquid crystal display. The display 60 can display various information, such as the above Euclidean distance over time and the trend line, etc. for example.

As described above, the reference data are time-series data that would be estimated assuming that the data were acquired at the evaluation reference temperature. The same is true for the corrected comparison data. Therefore, when computing dissimilarity, the influence of temperature change can be removed. As a result, the robot state evaluator 59 can more appropriately evaluate the state of the robot 1.

In the above example, the evaluation reference temperature is defined to be different from both the first base temperature and the second base temperature. However, the evaluation reference temperature may be equal to one of the first base temperature and the second base temperature. In this case, the value of the temperature ratio R1 described above will be 0 or 1, which simplifies the computation.

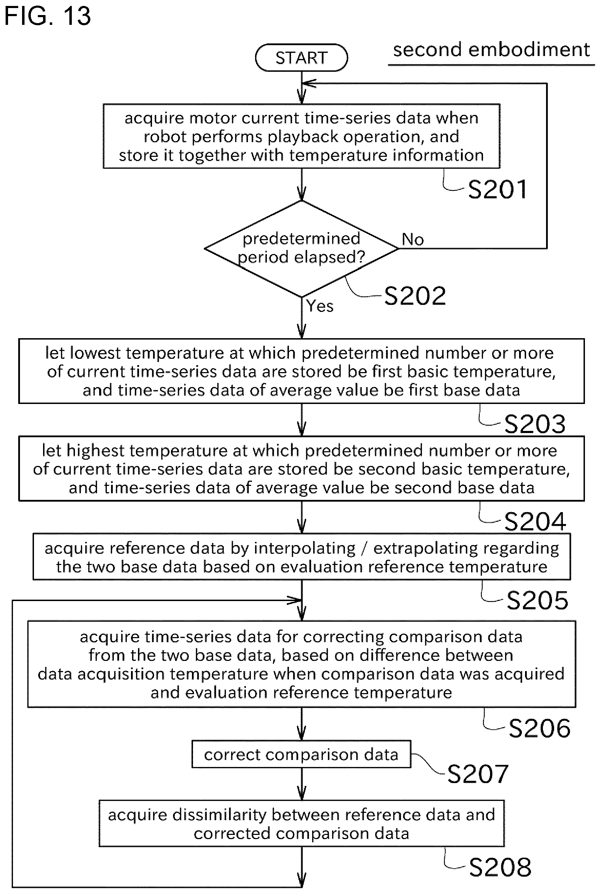

The processing of the state monitoring device 5 will be described with reference to a flowchart in FIG. 13. Steps S201 through S204 in FIG. 13 are the same as steps S101 through S104 in FIG. 11, respectively, so the explanation is omitted.

In this embodiment, after step S204 and before step S206, a process according to step S205 is performed. In step S205, the reference data acquirer 54 interpolates or extrapolates the first base data and the second base data based on the aforementioned evaluation reference temperature to acquire the time-series data. This time-series data are the reference data.

Steps S206 and S207 in FIG. 13 are the same as steps S105 and S106 in FIG. 11, respectively, so the description is omitted.

In step S208, the robot state evaluator 59 computes the dissimilarity between the reference data acquired in step S205 and the comparison data corrected in step S207. The acquired dissimilarity is output to the display 60.

The process then returns to step S206, and steps S206 through S208 are repeated.

As explained above, in the state monitoring device 5 according to this embodiment, based on the first base data and the second base data, reference data to be compared with the comparison data are acquired. The robot state evaluator 59 acquires the dissimilarity between the comparison data and the reference data.

This allows the degree of change in the current waveform to be properly evaluated while suppressing the influence of temperature changes.

In the state monitoring device 5 according to this embodiment, the robot state evaluator 59 determines the Euclidean distance between the comparison data and the reference data as the dissimilarity.

This allows for a good evaluation of the degree of change in the current waveform.

In the state monitoring device 5 according to this embodiment, the corrector 57 performs the linear correction by adding to the comparison data the difference computed by subtracting the first base data from the second base data, multiplied by (evaluation reference temperature - data acquisition temperature) / (second base temperature - first base temperature).

This simplifies the computation.

Next, the third embodiment will be described.

In the first embodiment described above, the reference data are not created and the corrected comparison data are used to compute the statistic value such as I2 or the like, and the state of the robot 1 is evaluated using the statistic value. In the second embodiment, after creating the reference data, the state of the robot 1 is evaluated using the Euclidean distance (dissimilarity), focusing on the similarity between the reference data and the corrected comparison data.

In this embodiment and subsequent, any of the above evaluation methods can be applied, with some exceptions. When the explanation states "when creating the reference data", it means that not only evaluation with the statistic value, but also evaluation using dissimilarities such as Euclidean distance between the reference data and the comparison data can be done.

In this embodiment, when computing the reference data, instead of simply interpolating or extrapolating by the temperature ratio for the first base data and the second base data, interpolation or extrapolation is performed by a current ratio acquired from the temperature ratio.

The following is a detailed explanation. Assuming that no-load running torque accounts for a large portion of lost torque of the motor, the current corresponding to this lost torque has the property of increasing approximately 1/A times with each increase in temperature, for example, tpu°C. A is a number greater than 1. This detail will be described below.

Therefore, the reference data can be acquired by interpolating or extrapolating for the first base data and second base data using a function that expresses that the current changes $A^{\wedge}(-\Delta tp / tpu)$ for each change in $\Delta tp$°C. The above function $\Delta I = f(\Delta tp)$ is also used to correct the comparison data.

The above function $\Delta I = f(\Delta tp)$ can be used only to correct the comparison data, without creating the reference data. In this case, I2 or the like is computed from the corrected data for comparison and used for evaluation.

As explained above, in this embodiment of the state monitoring device 5, the function $\Delta I = f(\Delta tp) = A^{\wedge}(-\Delta tp / tpu)$ is defined to represent the current change $\Delta I$ by the temperature change $\Delta tp$. The corrector 57 performs a linear correction by adding to the current-related data the difference acquired by subtracting the first base data from the second base data multiplied by Revaluation reference temperature - data acquisition temperature) / f(second base temperature - first base temperature).

This allows the comparison data to be corrected in a manner that more appropriately reflects the nature of the current change with respect to the temperature change.

Next, the fourth embodiment will be described. In the fourth embodiment, the corrector 57 corrects the comparison data in a manner different from the above embodiments.

In the example described above, the first base data and the second base data, which are current time-series data, are acquired at different temperatures from each other. If there is a difference in current values between the first base data and the second base data, this difference in current values corresponds to a composite of a variation in the dry friction torque and a variation in the no-load running torque.

The dry friction torque refers to the lost torque when the motor speed is near zero, meaning the known lost torque due to dry friction. However, the torque when the motor speed is near zero is considered to include lost torque other than dry friction torque, such as hysteresis loss. The no-load running torque means the lost torque due to the viscosity of the lubricant when the motor is rotated under no load. The current value corresponding to the sum of the dry friction torque and the no-load running torque may be referred to as lost torque current value.

The lost torque current value has the property that it is multiplied by 1/A for each increase in temperature by a given unit temperature tu. Here, A is a number greater than 1. The combination of the values of A and tu can be determined arbitrarily. For example, when tu is 10°C, the value of A can be determined to be not less than 1.1 and not more than 1.6, depending on the type of the reducer. For example, the value of A can be varied between high and low temperature ranges.

Considering the above properties, the lost torque current value $I_{lt,tp1}$ at the first base temperature can be expressed by the following equation when the current value of the first base data is $I_1$, the current value of the second base data is $I_2$, the first base temperature is tpi and the second base temperature is $tp_2$.

$$I_{lt,tp1} = (I_1 - I_2) / (1 - A^{\wedge}((tp_1 - tp_2) / t_U))$$

The lost torque current value $I_{lt,tp}x$ at the data acquisition temperature tpx can be expressed by the following equation.

$$I_{lt,tpX} = I_{lt,tp1} \times A^{\wedge}((tp_1 - tp_X) / t_U)$$

The lost torque current value $I_{lt,tp}s$ at the evaluation reference temperature tps can be expressed by the following equation.

$$I_{lt,tpS} = I_{lt,tp1} \times A^{\wedge}((tp_1 - tp_S) / t_U)$$

Therefore, by subtracting the lost torque current value $I_{lt,tp}x$ at the data acquisition temperature tpx from the acquired comparison data $I_{ORIG}$, and then adding the lost torque current value $I_{lt,tn}s$ at the evaluation reference temperature tps, the comparison data $I_{COMP}$ corrected to correspond to the evaluation reference temperature tps can be acquired.

$$I_{COMP} = I_{ORIG} - I_{lt,tpX} + I_{lt,tnS}$$

The above completes the correction by the corrector 57.

It is also possible to only subtract the lost torque current value $I_{lt,tp}x$ at the data acquisition temperature tpx from the comparison data $I_{ORIG}$ and not to add the lost torque current value $I_{lt,tn}s$ at the evaluation reference temperature tps ($I_{COMP} = I_{ORIG} - I_{lt,tp}x$). In this case, the current corresponding to the lost torque of the motor can simply be canceled in the comparison data $I_{ORIG}$. Correspondingly, the lost torque current value lit,tns at the evaluation reference temperature tps is subtracted with respect to the reference data. As described above, the reference data and the corrected comparison data can be properly compared in a manner that removes the current corresponding to the lost torque of the motor.

When determining the lost torque current value $I_{lt,tp}x$ at the data acquisition temperature tpx, in the above equation, each term except tpx is a constant. Therefore, if a conversion table for acquiring $I_{lt,tp}x$ from tpx is prepared in advance, the computation can be made faster and the detailed parameters can be easily adjusted. The same applies to acquiring the lost torque current value $I_{lt,tp}s$ at the evaluation reference temperature tps.

As explained above, in the state monitoring device 5 according to this embodiment, the first base data, the second base data, and the current-related data are respectively time-series data of the current. The corrector 57 corrects the comparison data with respect to the temperature characteristics of the lost torque of the motor.

This allows the correction to properly take into account the temperature characteristics of the lost torque of the motor.

In the state monitoring device 5 according to this embodiment, the corrector 57 corrects the comparison data using the relationship in which the current value corresponding to the lost torque is 1/A times for each predetermined unit temperature tu increase when A is a number greater than 1.

This allows the correction to properly take into account the trend of the temperature characteristics of the lost torque.

In the state monitoring device 5 according to this embodiment, when the unit temperature tu is 10°C, A is not less than 1.1 and not more than 1.6.

This allows the correction to specifically take into account the trend of the temperature characteristics of the lost torque.

In the state monitoring device 5 according to this embodiment, the corrector 57 can also correct the comparison data so that the current corresponding to the lost torque of the motor is cancelled.

In this case, the current corresponding to the lost torque of the motor can be removed from the time-series data of the current. Thus, the evaluation becomes simpler and may be advantageous for the state evaluation of the robot 1.

Next, the fifth embodiment is described.

This embodiment differs from the second embodiment described above in that the robot state evaluator 59 performs a process of displacing the comparison data relative to the reference data (to-be-compared data) in a time axis direction in order to match their phase.

Specifically, the robot state evaluator 59 in this embodiment performs a process to displace the waveform of the comparison data in multiple steps in the time axis direction. For each step, the robot state evaluator 59 acquires the Euclidean distance (dissimilarity) between the comparison data and the reference data by computation.

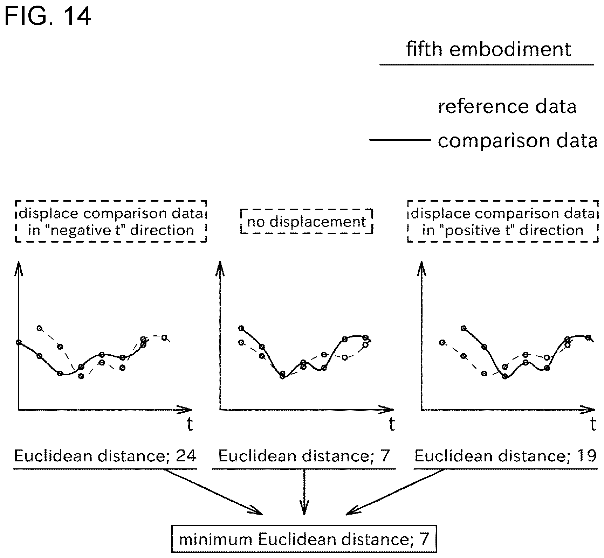

FIG. 14 shows an example of displacing the comparison data by two steps, one step in the negative direction and one step in the positive direction of the time axis. The Euclidean distance is computed for each three steps, including no displacement. Both the amount of displacement in the time axis direction per step and the number of steps of displacement can be set arbitrarily.

This displacing of the waveform can be achieved by uniformly shifting the correspondence between the m current values in the reference data and the m current values in the comparison data when computing the Euclidean distance.

In this embodiment, the robot state evaluator 59 acquires the minimum value of the Euclidean distance described above. This minimum value of the Euclidean distance is used as the evaluation value.

When interpolation or extrapolation is simply performed as in the embodiment described above, if there is a slight time delay between the waveform of the comparison data and the waveform of the reference data, for example, the Euclidean distance i.e., the evaluation value is significantly affected. In this embodiment, the comparison data are displaced relative to the reference data in the time axis direction to increase the degree of match between the comparison data and the reference data. Thus, appropriate evaluation can be performed.

It is preferred that an upper limit is defined for the amount by which the comparison data are displaced relative to the reference data in the time axis direction. This allows appropriate detection of a large phase deviation that indicates deterioration of the servo motor or the like, while ignoring a phase deviation as a measurement error.

As explained above, in the state monitoring device 5 according to this embodiment, the robot state evaluator 59 respectively determines the dissimilarity between the two waveforms, while displacing at least one of the waveform of the reference data and the waveform of the comparison data in multiple steps in the time axis direction. In the state where the comparison data are displaced so that the dissimilarity between the two waveforms is a minimum value, the robot state evaluator 59 determines the dissimilarity between the reference data and the comparison data.

This enables the evaluation of the dissimilarity between the reference data and the comparison data while correcting the misalignment in the time axis direction between the reference data and the comparison data to a certain degree. Thus, the evaluation of the state of the robot 1 becomes more appropriate.

Next, the sixth embodiment is described.

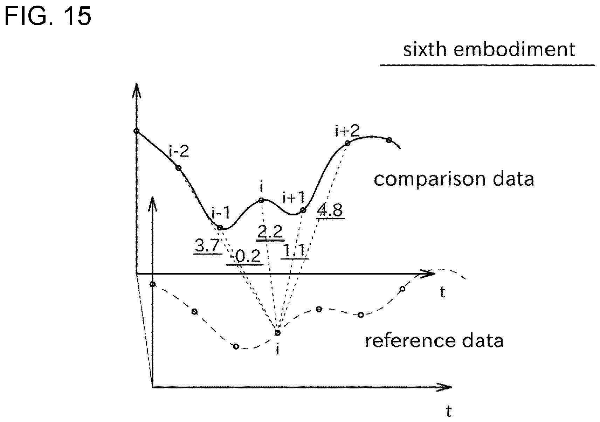

In this embodiment, the corrector 57 calculates the difference between the i-th current value among the m current values included in the reference data and the (i-p)-th to (i+p)-th current values among the m current values included in the comparison data, respectively. FIG. 15 is a schematic diagram showing the case where p = 2, and the difference in current values is represented by the underlined numbers.

The corrector 57 then examines which of the current values from the (i-p)-th to (i+p)-th of the comparison data is closest to the i-th current value of the reference data. In the example in FIG. 15, of the current values from the (i-2)-th to the (i+2)-th of the comparison data, the (i-1)-th has the smallest absolute difference from the i-th current value of the reference data, and the difference is -0.2. The corrector 57 corrects the i-th current value of the comparison data so that it becomes the (i-1)-th current value with the smallest absolute value of the difference mentioned above.

The corrector 57 repeats the above process for all m current values of the reference data. This modification allows the comparison data to be displaced to some extent in the time axis direction so as to increase the similarity to the reference data. The robot state evaluator 59 then determines the Euclidean distance between the reference data and the corrected comparison data as the dissimilarity. This allows for proper evaluation.

As explained above, in the state monitoring device 5 according to this embodiment, the reference data that are to be compared with the comparison data are acquired based on at least any of the first base data and second base data. The robot state evaluator 59 modifies the i-th sampling value of the comparison data with the sampling value closest to the i-th sampling values of the waveform of the reference data among the (i-p)-th to (i+p)-th sampling values (where i and p are integers of one or more) of the comparison data. The robot state evaluator 59 computes the dissimilarity between the modified comparison data and the reference data.

This allows the evaluation of the comparison data while correcting a certain degree of misalignment and distortion in the time axis direction between the reference data and the comparison data. Thus, the evaluation of the state of the robot 1 becomes more appropriate.

Next, the seventh embodiment is described.

This embodiment of the state monitoring device 5 has the reference data acquirer 54, similar to the second embodiment described above. This embodiment differs from the second embodiment in that the robot state evaluator 59 acquires a DTW distance based on a DTW method as a value indicating the dissimilarity between the comparison data and the reference data (to-be-compared data). DTW is an abbreviation for Dynamic Time Warping.

The DTW method will be briefly explained. The DTW method is used to compute the degree of similarity between two time-series data. A key feature of the DTW method is that it allows for nonlinear expansion and contraction of the time-series data in the time axis direction when computing the degree of similarity. This allows the DTW method to acquire results that are close to human intuition regarding the similarity of time-series data.

In this embodiment, the robot state evaluator 59 computes the DTW distance (dissimilarity), which indicates the magnitude of the difference between the comparison data and the reference data, and outputs this value as the evaluation value.

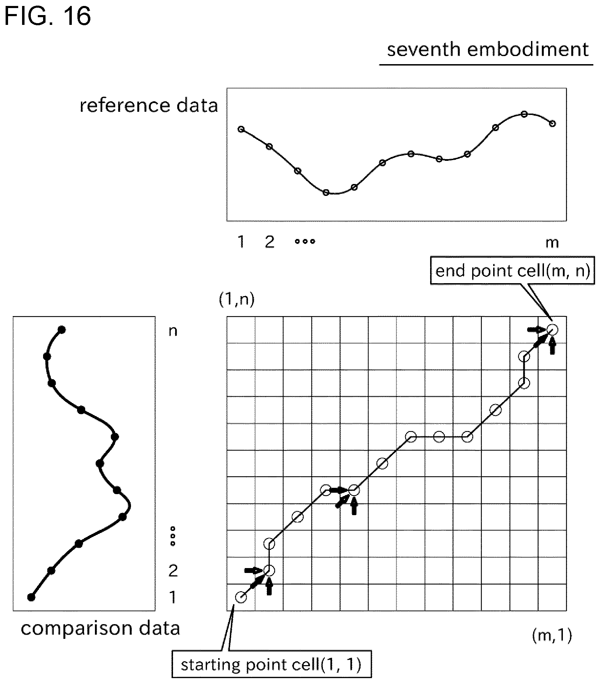

The principle of the DTW method is explained using FIG. 16. The s current values (s is plural) included in the reference data are arranged in chronological order along the first axis extending in the horizontal direction. The p current values (p is plural) included in the comparison data are arranged in chronological order along the second axis extending in the vertical direction.

Then, define s × p cells arranged in a matrix in the plane defined by the vertical and horizontal axes. Each cell (c, d) represents a mapping between the c-th current value in the reference data and the d-th current value in the comparison data. Here, $1 \leq c \leq d$.

Each cell (c, d) is associated with a numerical value representing the difference between the c-th current value in the reference data and the d-th current value in the data for comparison. In this embodiment, each cell is associated with the absolute value of the difference between the c-th current value and the d-th current value.

The robot state evaluator 59 finds the warping path (path) from the starting point cell located in the lower left corner of the matrix in FIG. 16 to the ending point cell located in the upper right corner.

The starting point cell (1, 1) corresponds to mapping the current value at the earliest timing in the time-series (i.e., 1st) of the s current values in the reference data to the current value at the earliest timing in the time-series (i.e., 1st) of the p current values in the comparison data.

The ending point cell (s, p) corresponds to mapping the current value at the last timing in the time-series (i.e., s-th) of the s current values in the reference data to the current value at the last timing in the time-series (i.e., p-th) of the p current values in the comparison data.

In the s × p matrix constructed as described above, consider the path starting from the starting point cell and reaching the ending point cell according to the following rules [1] and [2]. [1] May only move vertically, horizontally, or diagonally to adjacent cells. [2] Cannot move in the direction of backtracking the time of the reference data, nor can move in the direction of backtracking the time of the comparison data.

Such a sequence of cells is called a path or warping path. The warping path shows how the s current values in the reference data correspond to the p current values in the comparison data, respectively. From another perspective, the warping path represents how the two time-series data are expanded or contracted in the time axis direction.

There are multiple possible warping paths from the starting point cell to the ending point cell. Among the possible warping paths, the robot state evaluator 59 finds the warping path that minimizes the sum of the values representing the differences associated with the cells to be passed (in this embodiment, the absolute value of the difference between the c-th current value and the d-th current value). In the following, this warping path is sometimes referred to as optimal warping path. The sum of the values in each square in this optimal warping path may also be referred to as DTW distance. The robot state evaluator 59 acquires this DTW distance.

The DTW distance can be divided by the number of squares passed to compute the DTW distance average. The DTW distance average can be also computed by dividing the DTW distance by the number of elements in any of the time-series data (s or p). Instead of the DTW distance, the DTW distance average may be used as the evaluation value.

When s and p are large, a huge number of warping paths are possible. Therefore, assuming that all possible warping paths are considered, the computational cost to find the optimal warping path explodes. To solve this problem, the robot state evaluator 59 of this embodiment uses the DP matching method (Dynamic Programming) to find the optimal warping path. DP is an abbreviation for Dynamic Programming. The DP matching method is known and a description is omitted.

As explained above, in the state monitoring device 5 according to this embodiment, the reference data that are to be compared with the comparison data are acquired based on at least any of the first base data and the second base data. The robot state evaluator 59 computed the DTW distance between the comparison data and the reference data as the dissimilarity.

In this way, even if a time delay, distortion or the like in the time axis direction occurs between the comparison data and the reference data, the influence of it can be strongly excluded to acquire the dissimilarity.

Next, the eighth embodiment will be described.

For example, in the first embodiment, the first base data, the second base data, and the comparison data are respectively time-series data of the current value, and the statistic value is computed from the comparison data. On the other hand, in this embodiment, the first base data, the second base data, and the comparison data are respectively data acquired by appropriately statistically processing time-series data of the current value.

The statistical data can be any of I2, maximum value of current, minimum value of current, PTP, and PEAK, as described above.

When using statistical data, the first base data, the second base data and the comparison data are respectively simple scalar quantity. Therefore, the computation for interpolation or extrapolation is simplified when computing the reference data and correcting the comparison data.

As explained above, in the state monitoring device 5 according to this embodiment, the first current-related base data, the second current-related base data, and the current-related data are respectively I2, maximum current, minimum current, PTP, or PEAK.

This allows the influence of a temperature change on the statistical data of the current data to be suppressed by correction.

Next, the ninth embodiment will be described. First, the influence of a temperature change is explained with reference to a graph that differs from those in FIGS. 6 through 11 above.

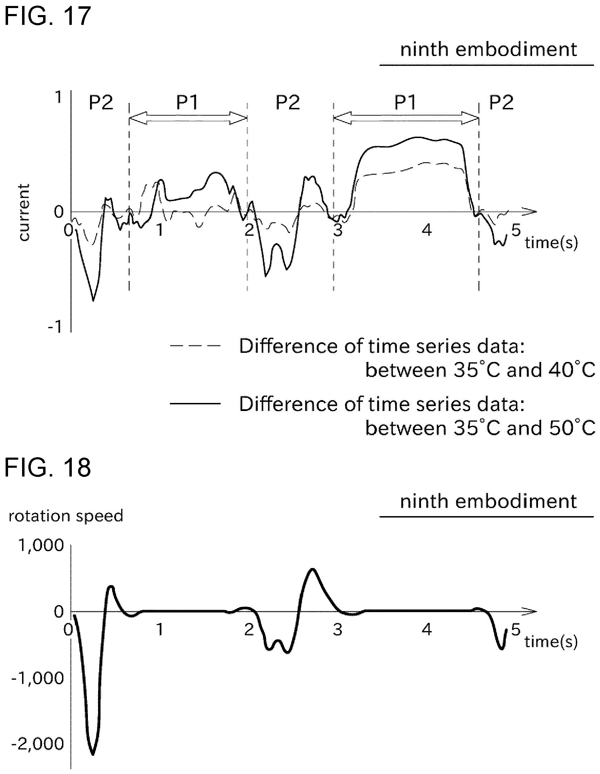

The graph in FIG. 17 shows, with respect to one of the servo motors provided by the robot 1, the current waveform at 40°C subtracted from the current waveform at 35°C, and the current waveform at 50°C subtracted from the current waveform at 35°C. The vertical axis of the graph is the current value, and the horizontal axis is time (specifically, seconds). The apparent difference between the two difference waveforms indicates that the current waveform has a temperature dependence.

The graph in FIG. 18 shows the speed of the servo motor when the robot 1 is made to perform a playback operation by the current waveform corresponding to FIG. 17. The vertical axis of the graph is speed and the horizontal axis is time (specifically, seconds). The time on the horizontal axis in FIG. 18 corresponds to the time on the horizontal axis in FIG. 17. As shown in FIG. 18, the period during which the robot 1 performs the playback operation by the current waveform that is the source of the difference waveform in FIG. 17 includes a period during which the motor rotation is substantially zero and a period during which the motor rotation is not substantially zero.

In the graph of FIG. 17, a first period P1 indicated by a white arrow is the period during which the motor rotation is substantially zero. The current value in this first period P1 is considered to correspond to the dry friction torque. A second period P2 without arrows is a period during which the motor rotation is not substantially zero. The current value in this second period P2 is considered to correspond to the no-load running torque.

In a case where the comparison data are time-series data, the corrector 57 can correct the comparison data only for either the first period P1 or the second period P2 shown in FIG. 17, for example. For example, for the first period P1, a simple linear correction as shown in the first embodiment can be performed on the comparison data, while for the second period P2, the comparison data can be corrected using the property that the temperature becomes 1/A times for each predetermined unit temperature tu increase. A simple linear correction can also be performed for both periods, based on the base data acquired separately for each period. Furthermore, the comparison data can be corrected with different values of A for each period, using the property that the temperature in both periods is 1/A times for each predetermined unit temperature tu increase.

In this way, the time-series data of the current value can be divided into periods when the motor rotation is substantially zero and periods when it is not, so that the method or the parameter of correction performed by the corrector 57 for each period are different. Alternatively, the correction can be made for only one of the two. This allows the influence of temperature changes to be more effectively removed.

As explained above, in this embodiment of the state monitoring device 5, when the corrector 57 divides the comparison data into a first period P1 in which the motor speed is substantially zero and a second period P2 in which the motor speed is not substantially zero, the correction is made only for one of the first period P1 and the second period P2. Alternatively, the correction for the first period P1 and the correction for the second period P2 are different from each other.

This allows better suppression of the influence of temperature changes.

While suitable embodiments of the disclosure have been described above, the above configuration can be modified, for example, as follows. The modification can be singly made and any combination of several modifications can be made.

The state monitoring device 5 does not have to be directly connected to the robot 1, but may obtain time-series data reflecting the state of the robot 1 from the controller 90 of the robot 1 via a communication line, such as the Internet, for example. In this case, the controller 90 acquires and stores the current values in real time in the playback operation, and transmits the time-series data of the current value together with the program number, date and time of acquisition of the current values, and information identifying the servo motor to the state monitoring device 5 by batch processing or the like.

The state monitoring device 5 may be included in the controller 90, instead of being provided separately from the controller 90. The state monitoring device 5 may also be realized using the computer of the controller 90 of the robot 1, without a computer functioning as CPU, ROM, RAM, auxiliary storage device, etc. of the state monitoring device 5.

The functions of each element, including the state monitoring device 5 disclosed above, may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. Processors are considered processing circuitry or circuitry as they include transistors and other circuitry therein. In the present disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

From the above disclosure, at least the following technical ideas can be ascertained.

(Item 1) A state monitoring device for monitoring a state of an industrial robot capable of playing back a predetermined operation, comprising:

a current-related base data acquirer that acquires, with respect to a current of a motor driving the industrial robot, first current-related base data being current data including at least one element or being statistical data of the current data, and second current-related base data being current data including at least one element or being statistical data of the current data;

a base temperature acquirer that acquires a first base temperature being a temperature at a time of acquisition of the first current-related base data, and a second base temperature being a temperature at a time of acquisition of the second current-related base data;

a current-related data acquirer that acquires, with respect to the current of the motor, current-related data being current data including at least one element or being statistical data of the current data;

a temperature acquirer that acquires a data acquisition temperature being a temperature at a time of acquisition of the current-related data;

a corrector corrects the current-related data based on the first current-related base data, the second current-related base data, the first base temperature, the second base temperature, and the data acquisition temperature; and

a robot state evaluator that evaluates the state of the robot using the current-related data after correction.

(Item 2) The state monitoring device according to item 1, wherein

the robot state evaluator performs, based on the current-related data after the correction, a computation of:

a root mean square of the current;
a maximum value of the current;
a minimum value of the current;
a value acquired by subtracting the current value of the low peak of the current waveform from the current value of the high peak of the current waveform; or
a larger value of an absolute value of the maximum value of the current and an absolute value of the minimum value of the current, and
the robot state evaluator evaluates the state of the robot based on a result of the computation.

(Item 3) The state monitoring device of item 1, wherein

to-be-compared data that are to be compared with the current-related data are acquired based on at least either the first current-related base data or the second current-related base data, and
the robot state evaluator determines a dissimilarity between the current-related data and the to-be-compared data.

(Item 4) The state monitoring device according to item 1,
the robot state evaluator determines an Euclidean distance between the current-related data and the to-be-compared data as the dissimilarity.

(Item 5) The state monitoring device according to item 3 or 4, wherein

the robot state evaluator computes the dissimilarity between the current-related data and the to-be-compared data while displacing the current-related data relative to the to-be-compared data in a plurality of steps in a time axis direction, and
in a state where the current-related data are relatively displaced so that the dissimilarity is a minimum value, the robot state evaluator determines the dissimilarity between the current-related data and the to-be-compared data.

(Item 6) The state monitoring device according to item 3, wherein
the robot state evaluator determines a DTW distance between the current-related data and the to-be-compared data as the dissimilarity.

(Item 7) The state monitoring device according to any one of items 1 to 6, wherein the first current-related base data, the second current-related base data, and the current-related data are respectively time-series data of the current.

(Item 8) The state monitoring device according to item 1, wherein the first current-related base data, the second current-related base data, and the current-related data are respectively either:

a root mean square of the current;

a maximum value of the current;

a minimum value of the current;

a value acquired by subtracting a current value of a low peak of a current waveform from a current value of a high peak of a current waveform; or

a larger value of an absolute value of a maximum value of the current and an absolute value of a minimum value of the current.

(Item 9) The state monitoring device according to any one of items 1 to 8, wherein the corrector corrects the current-related data so that the current-related data are correspond to data at an evaluation reference temperature that is predetermined.

(Item 10) The state monitoring device according to any one of items 1 to 7 and 9, wherein the corrector performs a linear correction by adding to the current-related data a difference computed by subtracting the first current-related base data from the second current-related base data, multiplied by (the evaluation reference temperature - the data acquisition temperature) / (the second base temperature - the first base temperature).

(Item 11) The state monitoring device according to any one of items 1 to 7 and 9, wherein when a function expressing a current change $\Delta I$ by a temperature change $\Delta tp$ is $\Delta I = f(\Delta tp)$, the corrector performs a linear correction by adding to the current-related data a difference computed by subtracting the first current-related base data from the second current-related base data, multiplied by f(the evaluation reference temperature - the data acquisition temperature) / f(the second base temperature - the first base temperature).

(Item 12) The state monitoring device according to any one of items 1 to 7 and 9 to 11, wherein

the first current-related base data, the second current-related base data, and the current-related data are respectively time-series data of the current, and the corrector corrects the current-related data so that the current-related data are correspond to data at an evaluation reference temperature that is predetermined, corrects with respect to a temperature characteristic of lost torque of the motor, or corrects to cancel the current corresponding to lost torque of the motor.

(Item 13) The state monitoring device according to any one of items 1 to 7 and 9 to 12, wherein the corrector corrects the current-related data using a relationship wherein a current value corresponding to lost torque of the motor is multiplied by 1/A for each predetermined unit temperature increase when A is a number greater than 1.

(Item 14) The state monitoring device according to any one of items 1 to 7 and 9 to 12, wherein the corrector, when the time-series data included in the current-related data are divided into a first period in which a speed of the motor is substantially zero and a second period in which the speed of the motor is not substantially zero, corrects for each of the first period and the second period differently from each other.

(Item 15) A state monitoring method for monitoring a state of an industrial robot capable of playing back a predetermined operation, comprising:

acquiring, with respect to a current of a motor driving the industrial robot, first current-related base data being current data including at least one element or being statistical data of the current data, and second current-related base data being current data including at least one element or being statistical data of the current data;

acquiring a first base temperature being a temperature at a time of acquisition of the first current-related base data, and a second base temperature being a temperature at a time of acquisition the second current-related base data;

acquiring, with respect to the current of the motor, current-related data being current data including at least one element or being statistical data of the current data;

acquiring a data acquisition temperature being a temperature at a time of acquisition of the current-related data;

correcting the current-related data based on the first current-related base data, the second current-related base data, the first base temperature, the second base temperature, and the data acquisition temperature; and

using the current-related data after correction for evaluating the state of the robot.

**Claims**

1. A state monitoring device for monitoring a state of an industrial robot capable of playing back a predetermined operation, comprising:

a current-related base data acquirer that acquires, with respect to a current of a motor driving the industrial robot, first current-related base data being current data including at least one element or being statistical data of the current data, and second current-related base data being current data including at least one element or being statistical data of the current data;

a base temperature acquirer that acquires a first base temperature being a temperature at a time of acquisition of the first current-related base data, and a second base temperature being a temperature at a time of acquisition of the second current-related base data;

a current-related data acquirer that acquires, with respect to the current of the motor, current-related data being current data including at least one element or being statistical data of the current data;

a temperature acquirer that acquires a data acquisition temperature being a temperature at a time of acquisition of the current-related data;

a corrector that performs a correction to the current-related data based on the first current-related base data, the second current-related base data, the first base temperature, the second base temperature, and the data acquisition temperature; and

a robot state evaluator that evaluates the state of the robot using the current-related data after the correction.

2. The state monitoring device according to claim 1, wherein
the robot state evaluator performs, based on the current-related data after the correction, a computation of:

a root mean square of the current;
a maximum value of the current;
a minimum value of the current;
a value acquired by subtracting a current value of a low peak of a current waveform from a current value of a high peak of the current waveform; or
a larger value of an absolute value of a maximum value of the current and an absolute value of a minimum value of the current, and
the robot state evaluator evaluates the state of the robot based on a result of the computation.

3. The state monitoring device according to claim 1, wherein

to-be-compared data that are to be compared with the current-related data are acquired based on at least either the first current-related base data or the second current-related base data, and
the robot state evaluator determines a dissimilarity between the current-related data and the to-be-compared data.

4. The state monitoring device according to claim 3, wherein
the robot state evaluator determines an Euclidean distance between the current-related data and the to-be-compared data as the dissimilarity.

5. The state monitoring device according to claim 3, wherein

the robot state evaluator computes the dissimilarity between the current-related data and the to-be-compared data while displacing the current-related data relative to the to-be-compared data in a plurality of steps in a time axis direction, and
in a state where the current-related data are relatively displaced so that the dissimilarity is a minimum value, the robot state evaluator determines the dissimilarity between the current-related data and the to-be-compared data.

6. The state monitoring device according to claim 3, wherein
the robot state evaluator determines a DTW distance between the current-related data and the to-be-compared data as the dissimilarity.

7. The state monitoring device according to claim 1, wherein
the first current-related base data, the second current-related base data, and the current-related data are respectively time-series data of the current.

8. The state monitoring device according to claim 1, wherein
the first current-related base data, the second current-related base data, and the current-related data are respectively either:

a root mean square of the current;
a maximum value of the current;
a minimum value of the current;
a value acquired by subtracting a current value of a low peak of a current waveform from a current value of a high peak of the current waveform; or
a larger value of an absolute value of a maximum value of the current and an absolute value of a minimum value of the current.

9. The state monitoring device according to claim 1, wherein
the corrector corrects the current-related data so that the current-related data are correspond to data at an evaluation reference temperature that is predetermined.

10. The state monitoring device according to claim 1, wherein
the corrector performs a linear correction by adding to the current-related data a difference computed by subtracting the first current-related base data from the second current-related base data, multiplied by (the evaluation reference temperature - the data acquisition temperature) / (the second base temperature - the first base temperature).

11. The state monitoring device according to claim 1, wherein
when a function expressing a current change $\Delta I$ by a temperature change $\Delta tp$ is $\Delta I = f(\Delta tp)$, the corrector performs a linear correction by adding to the current-related data a difference computed by subtracting the first current-related base data from the second current-related base data, multiplied by f(the evaluation reference temperature - the data acquisition temperature) / f(the second base temperature - the first base temperature).

12. The state monitoring device according to claim 1, wherein

the first current-related base data, the second current-related base data, and the current-related data are respectively time-series data the of current, and
the corrector corrects the current-related data so that the current-related data are correspond to data at an evaluation reference temperature that is predetermined, corrects with respect to a temperature characteristic of lost torque of the motor, or corrects to cancel the current corresponding to lost torque of the motor.

13. The state monitoring device according to claim 1, wherein
the corrector corrects the current-related data using a relationship wherein a current value corresponding to lost torque of the motor is multiplied by 1/A for each predetermined unit temperature increase when A is a number greater than 1.

14. The state monitoring device according to claim 1, wherein
the corrector, when the time-series data included in the current-related data are divided into a first period in which a speed of the motor is substantially zero and a second period in which the speed of the motor is not substantially zero, corrects for each of the first period and the second period differently from each other.

15. A state monitoring method for monitoring a state of an industrial robot capable of playing back a predetermined operation, comprising:

acquiring, with respect to a current of a motor driving the industrial robot, first current-related base data being current data including at least one element or being statistical data of the current data, and second current-related base data being current data including at least one element or being statistical data of the current data;
acquiring a first base temperature being a temperature at a time of acquisition of the first current-related base data, and a second base temperature being a temperature at a time of acquisition the second current-related base data;
acquiring, with respect to the current of the motor, current-related data being current data including at least one element or being statistical data of the current data;
acquiring a data acquisition temperature being a temperature at a time of acquisition of the current-related data;
performing a correction to the current-related data based on the first current-related base data, the second current-related base data, the first base temperature, the second base temperature, and the data acquisition temperature; and
using the current-related data after the correction for evaluating the state of the robot.

FIG. 1

FIG. 2

FIG. 3

FIG. 4

FIG. 5

second base data          first base data

$$\left( \boxed{\phantom{xxxxxxxx}} - \boxed{\phantom{xxxxxxxx}} \right) \times$$

$$\frac{\text{evaluation reference temperature} - \text{data acquisition temperature}}{\text{second base temperature} - \text{first base temperature}} +$$

comparison data          corrected comparison data

$$\boxed{\phantom{xxxxxxxx}} = \boxed{\phantom{xxxxxxxx}}$$

23

## FIG. 6

□ I2 (first example)

○ temperature

## FIG. 7

□ I2 (second example)

○ temperature

# FIG. 8

□  I2 (second example;
after correction)

FIG. 9

FIG. 10

# FIG. 11

START

acquire motor current time-series data when
robot performs playback operation, and
store it together with temperature information

S101

predetermined period elapsed?  — No

S102

Yes

let lowest temperature at which predetermined number or more
of current time-series data are stored be first base temperature,
and time-series data of average value be first base data

S103

let highest temperature at which predetermined number or more
of current time-series data are stored be second base temperature,
and time-series data of average value be second base data

S104

acquire time-series data for correcting comparison data
from the two base data, based on difference between
data acquisition temperature when comparison data was acquired
and evaluation reference temperature

S105

correct comparison data

S106

acquire statistic value such as I2 for corrected comparison data

S107

# FIG. 12

second embodiment

90

controller —— arm driver

21

state monitoring device

5

| | |
|---|---|
| 51 time-series data acquirer | corrector 57 |
| 52 base data acquirer | robot state evaluator 59 |
| 53 base temperature acquirer | display 60 |
| 54 reference data acquirer | |
| 55 comparison data acquirer | |
| 56 temperature acquirer | |

## FIG. 13

second embodiment

( START )

acquire motor current time-series data when
robot performs playback operation, and
store it together with temperature information

S201

predetermined
period elapsed? — No

S202

Yes

let lowest temperature at which predetermined number or more
of current time-series data are stored be first basic temperature,
and time-series data of average value be first base data

S203

let highest temperature at which predetermined number or more
of current time-series data are stored be second basic temperature,
and time-series data of average value be second base data

S204

acquire reference data by interpolating / extrapolating regarding
the two base data based on evaluation reference temperature

S205

acquire time-series data for correcting comparison data
from the two base data, based on difference between
data acquisition temperature when comparison data was acquired
and evaluation reference temperature

S206

correct comparison data

S207

acquire dissimilarity between reference data and
corrected comparison data

S208

# FIG. 14

fifth embodiment

---- reference data

——— comparison data

| displace comparison data in "negative t" direction | no displacement | displace comparison data in "positive t" direction |

Euclidean distance; 24   Euclidean distance; 7   Euclidean distance; 19

minimum Euclidean distance; 7

# FIG. 15

sixth embodiment

comparison data

reference data

## FIG. 16

reference data

1 2 ∘∘∘ m

end point cell(m, n)

(1,n)

n

comparison data

∘∘ 2 1

starting point cell(1, 1)

(m,1)

## FIG. 17

ninth embodiment

- - - - Difference of time series data:
between 35°C and 40°C

——— Difference of time series data:
between 35°C and 50°C

## FIG. 18

ninth embodiment

## INTERNATIONAL SEARCH REPORT

International application No.

**PCT/JP2022/041201**

### A. CLASSIFICATION OF SUBJECT MATTER

***B25J 19/00***(2006.01)i
FI: B25J19/00 Z

According to International Patent Classification (IPC) or to both national classification and IPC

### B. FIELDS SEARCHED

Minimum documentation searched (classification system followed by classification symbols)

B25J1/00-21/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2019-141983 A (KAWASAKI JUKOGYO KABUSHIKI KAISHA) 29 August 2019 (2019-08-29) | 1-15 |
| A | JP 2006-281421 A (YASKAWA ELECTRIC MFG. CO., LTD.) 19 October 2006 (2006-10-19) | 1-15 |

☐ Further documents are listed in the continuation of Box C.  ☑ See patent family annex.

| | | |
|---|---|---|
| \* | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **27 December 2022** | **17 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/041201**

| Patent document cited in search report | | | Publication date (day/month/year) | Patent family member(s) | Publication date (day/month/year) |
|---|---|---|---|---|---|
| JP | 2019-141983 | A | 29 August 2019 | (Family: none) | |
| JP | 2006-281421 | A | 19 October 2006 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007190663 A